**Europäisches Patentamt**

**European Patent Office**

**Office européen des brevets**

(19)

(11) Numéro de publication: **0 023 875**
**B1**

(12) **FASCICULE DE BREVET EUROPEEN**

(51) Int. Cl.³: **F 16 C 39/00**, B 64 G 1/44

(45) Date de publication du fascicule du brevet:
08.06.83

(21) Numéro de dépôt: **80401152.6**

(22) Date de dépôt: **04.08.80**

(54) Dispositif allégé de pivotement à stator et rotor pour satellite.

(30) Priorité: **06.08.79 FR 7920127**

(43) Date de publication de la demande:
**11.02.81 Bulletin 81/6**

(45) Mention de la délivrance du brevet:
**08.06.83 Bulletin 83/23**

(84) Etats contractants désignés:
**AT CH DE GB IT LI NL SE**

(56) Documents cités:
**FR-A-467 907**
**FR-A-1 237 775**
**FR-A-2 187 048**
**FR-A-2 257 077**
**FR-A-2 294 430**

(73) Titulaire: **SOCIETE NATIONALE INDUSTRIELLE AEROSPATIALE Société dite:, 37 Boulevard de Montmorency, F-75781 Paris Cedex 16 (FR)**

(72) Inventeur: **Poubeau, Pierre, 6, allée du Bois Domaine de Grandchamp, F-78230 Le Pecq (FR)**
Inventeur: **Barkats, Gérard, Résidence les Terrasses BC 433, rue Janvier Pasero, F-06210 Mandelieu (FR)**

(74) Mandataire: **Rinuy, Guy et al, Cabinet Rinuy et Santarelli 14, Avenue de la Grande Armée, F-75017 Paris (FR)**

ACTORUM AG

## Dispositif allégé de pivotement à stator et rotor pour satellite

La présente invention a trait aux dispositifs de pivotement pour satellites et concerne plus particulièrement les mâts destinés à servir de support de liaison pour les panneaux solaires orientables, procurant l'énergie électrique du bord.

Le problème soulevé par la liaison de ces panneaux a déjà reçu une première solution à travers la demande de brevet français No 79.06343 (FR-A No 2451595) du 13 mars 1979 de la titulaire (publiée le 10 octobre 1980 et donc pas comprise dans l'état de la technique selon l'article 54 CBE) intitulée: «Dispositif pivotant à stator et rotor pour satellite», où il était indiqué qu'il était possible de faire une adaptation des technologies déjà développées et explicitées notamment à travers une demande antérieure de la titulaire relative à un «volant d'inertie pour satellite» et déposée en France le 3 janvier 1974 sous le No 74.00190 (FR-A No 2257077) suivi de son premier certificat d'addition No 74.40556 (FR-A No 2294430) déposé le 10 décembre 1974.

Il était ainsi connu, d'après ce dernier document, de disposer, dans un volant d'inertie pour satellite à rotor et stator, aux extrémités axiales du rotor, deux dispositifs magnétiques passifs de centrage radial comportant, au choix, des couronnes magnétiques aimantées axialement ou radialement. Dans ce dernier cas, chaque dispositif comportait, réparties entre le rotor et le stator avec des sens opposés d'aimantation, quatre couronnes magnétiques, décalées axialement et enserrées entre des anneaux toriques ferromagnétiques, adaptées pour engendrer deux forces axiales égales et de sens opposés. Il s'ensuivait, pour chaque dispositif, une force axiale résultante sensiblement nulle, tandis que des champs magnétiques axiaux dans les entrefers entre anneaux toriques assuraient la raideur radiale élevée requise entre rotor et stator.

Selon une telle disposition de ces moyens de suspension magnétique passive radiale et dans le but de satisfaire le théorème d'Earnshaw, un troisième moyen complémentaire de suspension actif à centrage électromagnétique axial était disposé entre rotor et stator et son asservissement s'effectuait à partir de détecteurs de vitesse et de position chargés de maintenir le rotor dans une position axiale donnée constante par rapport au stator.

La nécessité de réduire au strict minimum, sur les satellites actuellement projetés, les masses des équipements de servitude au profit d'équipements d'exploitation notamment électroniques, a conduit la titulaire à envisager la suppression de certains desdits équipements de servitude pour lesquels des moyens de substitution équivalents pouvaient être envisagés.

Ainsi, considérant le caractère occasionnel du fonctionnement en dispositif d'appui de secours prévu afin de protéger éventuellement les parties mobiles par rapport aux parties fixes, et le fait que les éléments en présence sont soumis à une rotation lente, la titulaire propose d'utiliser, dans la présente invention, et de manière permanente, ledit dispositif d'appui, prévu antérieurement en secours, en le déchargeant toutefois axialement, par des moyens magnétiques passifs appropriés, de telle sorte que le moyen de suspension magnétique axial actif précédemment mentionné avec son asservissement correspondant devienne totalement inutile et conduise de ce fait à sa suppression pure et simple. Il s'agit là d'une démarche inverse de celle proposée par le brevet FR-A No 1237775 qui préconisait de réduire par des moyens magnétiques les charges axiales supportées par un palier de butée, selon des dispositions toutefois trop rudimentaires pour pouvoir s'appliquer au domaine spatial.

Pour ce faire, et afin de tenir compte des contraintes technologiques imposées par les phénomènes magnétiques conditionnant la raideur radiale des paliers magnétiques mis en œuvre, l'invention utilise préférentiellement le moyen d'appui avec pivot et butée déjà décrit dans la demande susmentionnée No 74.00190 (FR-A No 2257077) déposée le 3 janvier 1974 par la titulaire.

De la sorte, et par le fait de l'utilisation du système pivot-butée présentement préconisé, il est alors possible de mettre en œuvre une méthode d'entraînement du rotor par un dispositif roue - vis sans fin de type magnétique déjà décrit dans une autre demande de brevet français de la titulaire No 72.20608 (FR-A No 2199838) en date du 8 juin 1972 et dénommée «Réducteur de vitesse à engrenages magnétiques» et son premier certificat d'addition No 76.27519 (FR-A No 2364381) du 13 septembre 1976.

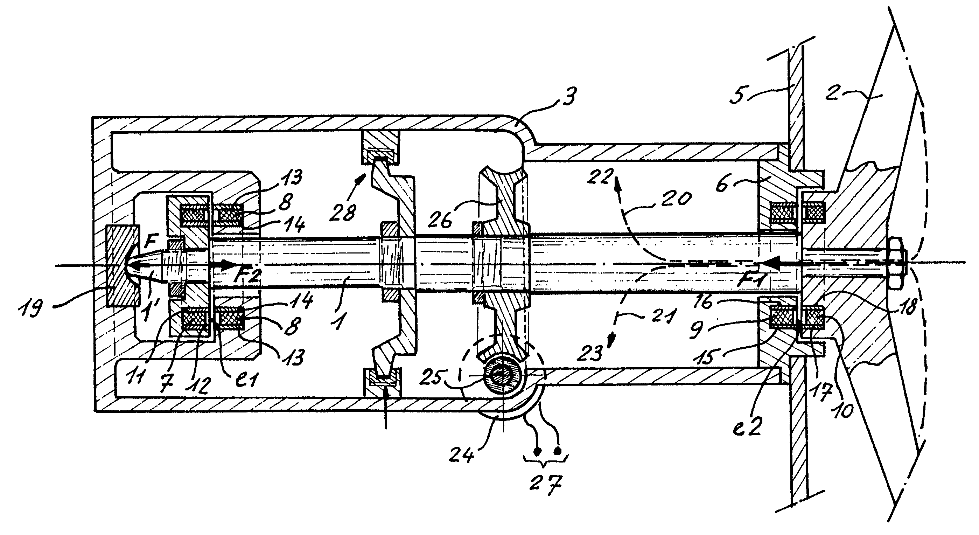

La présente invention va, de toutes les manières, être bien comprise dans la suite du texte qui va décrire, à titre d'exemple, et à l'appui du dessin annexé montrant la conformation selon une coupe axiale d'un mât-support de panneaux solaires, les moyens utilisés pour parvenir à la meilleure mise en œuvre de cette invention.

Il doit, tout d'abord, être rappelé que la demande de brevet No 79.06343 (FR-A No 2451595) déjà mentionnée visait un dispositif de support de panneaux solaires orientables comportant un moyen de suspension axiale dont l'asservissement assurait en permanence la position axiale moyenne du rotor par rapport au stator.

En d'autres termes, le rotor était constamment maintenu axialement au zéro des forces des électro-aimants de rappel, c'est-à-dire que tout écart axial dans un sens ou dans l'autre déclenchait immédiatement un signal d'asservissement qui agissait sur l'électro-aimant convenable pour produire l'annulation de l'écart constaté.

Un tel dispositif présentait l'avantage d'éliminer totalement les frottements puisque, par ailleurs, la suspension radiale était obtenue en permanence par des couronnes de centrage magnétiques passives, c'est-à-dire pour lesquelles aucune source de courant n'était nécessaire.

Le revers d'un tel montage résultait des masses appréciables que représentaient les aimants et électro-aimants, d'une part, et le détecteur de vitesse d'asservissement, d'autre part, ce qui a conduit la titulaire à envisager la mise en œuvre du dispositif d'appui axial de secours prévu en redondance du système électromagnétique asservi susmentionné et, corrélativement, la suppression de ce dernier.

Sur la figure annexée, les couronnes de centrage radial passif sont disposées par paires aux extrémités, d'une part, de l'arbre 1 portant le panneau solaire 2 et, d'autre part, du corps 3 assujetti au corps du satellite 5 par un élément intermédiaire 6.

Chaque paire de couronnes aimantées est constituée de deux tores 7-8 et 9-10 faits d'un matériau à très haute énergie magnétique tel que du samarium-cobalt, par exemple, et ces tores, qui sont aimantés radialement en directions inversées, sont enserrés entre des anneaux usinés 11-12, 13-14 et 15-16, 17-18 faits en un matériau ferromagnétique.

Ainsi, les champs magnétiques se renferment selon les deux tores magnétiques constitués, chacun, des deux tores de matériaux magnétiques et des quatre anneaux ferromagnétiques de telle sorte que les entrefers e1 et e2 soient sensiblement égaux entre les parties fixes et les parties mobiles.

Un tel système a une position d'équilibre instable qui correspond à des entrefers égaux pour des couronnes magnétiques équivalentes.

Un décalage initial du rotor par rapport à cette position d'équilibre crée une force dans une direction bien déterminée.

Cette force est utilisée pour mettre le rotor en appui contre une butée.

Selon la figure et comme exposé ci-dessus, les forces axiales appliquées sur le rotor conduisent à l'expression F1 > F2 et la force F = F1 − F2 résultante se trouve annulée par réaction de la partie 1' de l'axe 1 contre la butée de pivotement 19 à très faible couple.

Il est bien évident que les moyens magnétiques pouvant être utilisés pour produire F1 > F2 peuvent être de toute nature et inclure, du côté F1 notamment, soit plusieurs paires de couronnes, ou bien encore un dimensionnement magnétique de F1 plus important que F2 en incorporant éventuellement un réglage magnétique.

Ainsi, la force F = F1 − F2 peut être ajustée à toute valeur convenable aussi faible que désiré.

De préférence, mais non exclusivement, le pivotement est obtenu, à partir de matériaux qualifiés spatialement, par un pivot acier contre une butée en polyimide dopé tel que cela était d'ailleurs révélé par la titulaire dans sa demande de brevet français précitée No 74.00190.

Les couronnes magnétiques sont normalement dimensionnées pour assurer une raideur radiale suffisante au maintien du rotor par rapport au stator.

Toutefois, la raideur radiale étant limitée par le fait de l'utilisation de moyens magnétiques, le moyen de liaison électrique du panneau solaire au corps du satellite et le moyen d'entraînement en rotation du panneau avaient été, dans la solution antérieure, prévus par câble souple enroulé et moteur de type coaxial, de manière à réduire au maximum les efforts parasites sur le rotor.

Dans la solution proposée par la présente invention et du fait de la mise en œuvre d'une butée mécanique, l'accroissement de la raideur radiale en résultant peut être mis à profit pour, d'une part, produire l'entraînement en rotation du rotor, par un système roue et vis sans fin magnétique, tel que cela résulte de la demande No 76.27519 (FR-A No 2364381) déjà mentionnée et, d'autre part, assurer le passage du courant à l'aide de dispositifs frottants, également décrits dans la demande antérieure française No 72.20610 (FR-A No 2188914) déposée le 8 juin 1972 par la titulaire.

Ainsi, les câbles d'arrivée 20 et 21 sont reliés auxdits dispositifs à contacts frottants (repérés 22 et 23, mais non représentés sur le dessin), tandis que le moteur 24 entraînant la vis sans fin magnétique 25 met en mouvement la roue 26 solidaire de l'arbre du rotor 1. Le moyen de liaison électrique pourra également être constitué par un câble enroulé.

Un système d'asservissement convenablement conçu assure, par ailleurs, la mise en position angulaire correcte du panneau en agissant sur l'alimentation 27 du moteur 24.

Enfin, l'immobilisation temporaire du rotor par rapport au stator requiert la mise en œuvre d'un dispositif de verrouillage repéré 28 dans son ensemble et qui peut être celui dont le principe a déjà été exposé dans la demande No 79.06343 précitée.

D'une manière générale, il peut être constaté que l'invention propose un dispositif allégé de pivotement à stator et rotor pour satellite, qui peut être appliqué préférentiellement pour des panneaux solaires, mais qui peut également recevoir application pour toute autre utilisation telle qu'orientation d'antenne par exemple.

L'allégement obtenu, qui résulte de la suppression du système de suspension axiale asservie, conduit corrélativement à un accroissement de la fiabilité en éliminant la possibilité de défaillances de l'asservissement.

Enfin, la force d'application du pivot sur la butée peut être établie à toute valeur convenable par réglage de la position de la butée éventuellement asservie, ce qui permet de compenser l'usure de cette butée.

Pour ce faire, tout moyen mécanique connu permettant d'assurer un positionnement positif peut être appliqué.

Bien entendu, la présente invention n'a été décrite qu'à titre d'exemple préférentiel et on pourra apporter des équivalences dans ses éléments constitutifs sans pour autant sortir de son cadre, lequel est défini dans les revendications qui suivent.

C'est ainsi, en particulier, qu'il est possible de grouper à l'extrémité de l'arbre opposée au pivot la ou les paires de couronnes ou tout dispositif magnétiquement équivalent.

## Revendications

1. Dispositif allégé de pivotement à stator et rotor pour satellite, du genre comportant au moins un premier jeu (9, 10) et un second jeu (7, 8) de deux couronnes aimantées radialement en sens opposé, les couronnes aimantées dans un premier sens (7, 10) étant solidaires du rotor (1), et les couronnes aimantées dans l'autre sens (8, 9) étant solidaires du stator (3, 6), ces deux jeux amenant à travers des anneaux ferromagnétiques concentriques (11-18) des champs magnétiques axiaux créant, d'une part, des forces axiales $F_1$ et $F_2$ de sens opposé et contribuant, d'autre part, à la raideur radiale requise entre ledit rotor et ledit stator, ainsi qu'une butée mécanique (19) adaptée à coopérer avec une partie terminale (1') de l'axe du rotor formant pivot, et un moyen de pivotement du rotor (24-26), caractérisé en ce que lesdits jeux de couronnes aimantées (7-10) génèrent des forces présentant une différence algébrique $F = F_1 - F_2$ appliquée à l'encontre de ladite butée (19) qui oppose une réaction égale mais de sens opposé, et que ledit dispositif comporte, en outre, un dispositif de verrouillage temporaire (28) pour solidariser provisoirement le rotor et le stator, et un moyen de liaison (20-23) entre rotor et stator pour assurer les connexions électriques nécessaires.

2. Dispositif allégé de pivotement à stator et rotor pour satellite selon la revendication 1, caractérisé en ce que la force d'appui F résultant de l'expression $F_1 - F_2$ est contrôlée en permanence par des moyens mécaniques pour compenser des anomalies telles que l'usure de la butée (19), par exemple.

3. Dispositif allégé de pivotement à stator et rotor pour satellite selon la revendication 1, caractérisé en ce que l'ensemble pivot - butée (1', 19) est à très faible couple et est obtenu à partir de matériaux qualifiés spatialement.

4. Dispositif allégé de pivotement à stator et rotor pour satellite selon la revendication 1, caractérisé en ce que le moyen de pivotement du rotor est réalisé par un système (26, 25) roue - vis sans fin magnétique et que le moteur (24) de la vis (25) est asservi au positionnement angulaire du rotor.

5. Dispositif allégé de pivotement à stator et rotor pour satellite selon la revendication 1, caractérisé en ce que le moyen de liaison électrique entre rotor et stator est réalisé par des contacts électriques glissants (22, 23).

6. Dispositif allégé de pivotement à stator et rotor pour satellite selon la revendication 1, caractérisé en ce que le moyen de liaison électrique entre rotor et stator est réalisé par câble enroulé.

## Claims

1. A lightened pivoting device with stator and rotor for satellite of the type comprising at least one first set (9, 10) and a second set (7, 8) of two crowns radially magnetized in opposite direction, with those crowns magnetized in a first direction (7, 8) being fastened to the rotor (1) and those crowns magnetized in the other direction (8, 9) being fastened to the stator (3, 6), both of these sets producing, through concentric ferromagnetic rings (11-18), axial magnetic fields creating axial forces $F_1$ and $F_2$ of opposite direction, on the one hand, and, on the other hand, contributing to the required radial stiffness between said rotor and said stator, as well as a mechanical abutment (19) adapted for cooperation with an end portion (1') of the pivot-forming axis of the rotor, and means for pivoting the rotor (24-26), characterized in that said sets of magnetized crowns (7-10) generate forces presenting an algebraic differential $F = F_1 - F_2$ applied against said abutment (19) which opposes an equal reaction but of the opposite direction, and in that said device also comprises a temporary locking device (28) for temporarily linking the rotor and stator together, and connecting means (20-23) between rotor and stator to provide the necessary electric connections.

2. A lightened pivoting device with stator and rotor for satellite according to claim 1, characterized in that the application force F resulting from the expression $F_1 - F_2$ is permanently controlled by a mechanical means to compensate for anomalies such as, for example, the wear of the abutment (19).

3. A lightened pivoting device with stator and rotor for satellite according to claim 1, characterized in that the pivot and abutment assembly (1', 19) has a very low torque and is produced from materials qualified for space.

4. A lightened pivoting device with stator and rotor for satellite according to claim 1, characterized in that the rotor pivoting means is realized with a wheel and magnetic endless screw assembly (26, 25) and in that the motor (24) of the screw (25) is servo-controlled from the angular positioning of the rotor.

5. A lightened pivoting device with stator and rotor for satellite according to claim 1, characterized in that the electric connection means between rotor and stator is provided by slidable electric contacts (22, 23).

6. A lightened pivoting device with stator and rotor for satellite according to claim 1, characterized in that the electric connection means between rotor and stator is provided by a rolled up cable.

## Patentansprüche

1. Entlastete Schwenkvorrichtung für Stator und Rotor eines Satelliten, bei der mindestens ein erster Satz (9, 10) und ein zweiter Satz (7, 8) von je zwei in Radialrichtung in entgegengesetztem Sinne magnetisierten Ringen vorgesehen sind, wobei die in einer ersten Richtung magnetisierten Ringe (7, 10) an dem Rotor (1) befestigt sind und die in der anderen Richtung magnetisierten Ringe (8, 9) an dem Stator (3, 6) befestigt sind, und die beiden Sätze durch ferromagnetische konzentrische Ringe (11-18) axiale Magnetfelder leiten, die

einesteils axiale Kräfte $F_1$ und $F_2$ in zueinander entgegengesetzter Richtung schaffen und andererseits zur erforderlichen radialen Steifigkeit zwischen dem Rotor und dem Stator beitragen, bei der noch ein mit einem Endabschnitt (1') der das Schwenklager bildenden Achse des Rotors zusammenwirkender mechanischer Anschlag (19) vorgesehen ist und ein Schwenkmittel des Rotors (24-26), dadurch gekennzeichnet, dass die beiden Sätze von magnetisierten Ringen (7-10) Kräfte erzeugen, die eine algebraische Differenz $F = F_1 - F_2$ ergeben, die gegen den Anschlag (19) wirkt und einer gleich grossen, jedoch entgegengesetzt gerichteten Reaktion entgegenwirkt, und dass die Schwenkvorrichtung darüberhinaus eine zeitweilige Verriegelungsvorrichtung (28) zur provisorischen Verbindung des Rotors und des Stators enthält und ein Verbindungsmittel (20-23) zwischen dem Rotor und dem Stator zum Sicherstellen der notwendigen elektrischen Verbindungen.

2. Entlastete Schwenkvorrichtung für Stator und Rotor eines Satelliten nach Anspruch 1, dadurch gekennzeichnet, dass die sich aus dem Ausdruck $F_1 - F_2$ ergebende Stützkraft F dauernd durch die mechanischen Mittel kontrolliert ist zum Ausgleich der z.B. durch den Verschleiss des Anschlages (19) hervorgerufenen Anomalien.

3. Entlastete Schwenkvorrichtung für Stator und Rotor eines Satelliten nach Anspruch 1, dadurch gekennzeichnet, dass die Gesamtheit Schwenkachseanschlag (1', 19) sehr drehmomentschwach und aus raumfahrtqualifizierten Materialien gefertigt ist.

4. Entlastete Schwenkvorrichtung für Stator und Rotor eines Satelliten nach Anspruch 1, dadurch gekennzeichnet, dass das Schwenkmittel des Rotors durch ein magnetisches endloses Schneckenradsystem (26, 25) gebildet ist und dass der Antrieb (24) für die Schnecke (25) durch die Winkellage des Rotors gesteuert ist.

5. Entlastete Schwenkvorrichtung für Stator und Rotor eines Satelliten nach Anspruch 1, dadurch gekennzeichnet, dass die elektrischen Verbindungsmittel zwischen Rotor und Stator durch elektrische Gleitkontakte (22, 23) gebildet sind.

6. Entlastete Schwenkvorrichtung für Stator und Rotor eines Satelliten nach Anspruch 1, dadurch gekennzeichnet, dass die elektrischen Verbindungsmittel zwischen Rotor und Stator durch ein gerolltes Kabel gebildet sind.